(19)

**Europäisches Patentamt**

**European Patent Office**

**Office européen des brevets**

(11) **EP 4 553 128 A1**

(12) **EUROPEAN PATENT APPLICATION**
published in accordance with Art. 153(4) EPC

(43) Date of publication:
**14.05.2025 Bulletin 2025/20**

(21) Application number: **23835512.7**

(22) Date of filing: **04.07.2023**

(51) International Patent Classification (IPC):
*C09J 201/00* $^{(2006.01)}$     *C09J 11/08* $^{(2006.01)}$

(52) Cooperative Patent Classification (CPC):
**C09J 11/08; C09J 201/00**

(86) International application number:
**PCT/JP2023/024709**

(87) International publication number:
**WO 2024/009980 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.07.2022 JP 2022108553**

(71) Applicant: **Maruzen Petrochemical Co., Ltd.
Tokyo 104-8502 (JP)**

(72) Inventors:
• **SAITO Kyohei
Ichihara-shi, Chiba 290-8503 (JP)**
• **TAKAHASHI Takashi
Ichihara-shi, Chiba 290-8503 (JP)**

(74) Representative: **Regimbeau
20, rue de Chazelles
75847 Paris Cedex 17 (FR)**

(54) **ADDITIVE FOR HOT MELT ADHESIVE AND HOT MELT ADHESIVE COMPOSITION**

(57)     [Problem] Provided is an additive for a hot melt adhesive, with which additive a hot melt adhesive composition excellent in low-temperature applicability and bleedout resistance can be obtained.

[Solution] The present invention is an additive for a hot melt adhesive, including a C5 resin, wherein the additive for a hot melt adhesive is characterized in that the viscosity performance index VI of the C5 resin is 1.0 or more and 10,000 or less.

**EP 4 553 128 A1**

**Description**

BACKGROUND OF THE INVENTION

Field of the Invention

The present invention relates to an additive for a hot melt adhesive. Additionally, the present invention relates to a hot melt adhesive composition including the additive for a hot melt adhesive.

Background Art

Generally, a hot melt adhesive composition is melted in a heat-melting tank before being applied to an adherend of some kind. The hot melt adhesive heat-melted is applied to a base material of some kind at a suitable application temperature.

A conventional hot melt adhesive composition is applied to a base material of some kind at a relatively high temperature (160 to 180°C) (see Patent Literature 1). For example, the melt viscosity of a hot melt adhesive composition in Patent Literature 1 is approximately 3,000 to 30,000 mPa·s at 150 to 170°C.

On the other hand, application work at a temperature (110 to 140°C) lower than a conventional application temperature (160 to 180°C) has been desired in recent years from the viewpoints of ensuring the safety of application work and protecting a base material as an adherend. Currently, a hot melt adhesive composition that is mainly distributed is designed on the assumption that application work is performed at a relatively high temperature (160 to 180°C), and hence, such a composition has poor application performance at a relatively low temperature (110 to 140°C).

Additionally, with attention paid to a component of a hot melt adhesive composition, a means of giving low-temperature applicability is to increase the compositional ratio of a plasticizer. A plasticizer plays a role in decreasing the viscosity of a hot melt adhesive composition, and hence, adjusting the blending ratio of the plasticizer enables the viscosity to be adjusted desirably. That is, such an adjustment allows application at a relatively low temperature (110 to 140°C).

However, a drawback in increasing the blending ratio of a plasticizer is that after a hot melt adhesive composition is bonded to a base material or an adherend, a bleedout phenomenon in which the hot melt adhesive composition oozes out is more likely to occur in an environment of usage (at ordinary temperature to approximately 40°C). A problem causable by the generation of bleedout is, for example, poor appearance or poor adhesion. Accordingly, it has been extremely difficult to have both low-temperature applicability and bleedout resistance.

Citation List

Patent Literature

Patent Literature 1: JP2008-239931A

SUMMARY OF THE INVENTION

Technical Problem

An object of the present invention is to provide an additive for a hot melt adhesive, with which additive a hot melt adhesive composition excellent in low-temperature applicability and bleedout resistance can be obtained.

Solution to Problem

The present inventors have made studies vigorously, and consequently discovered that a hot melt adhesive composition excellent in low-temperature applicability and bleedout resistance can be obtained by decreasing the viscosity of a plasticizer in an application environment at a relatively low temperature (110 to 140°C), and besides, decreasing the fluidity (i.e., increasing the viscosity) of a plasticizer in an environment of usage (at ordinary temperature to approximately 40°C).

That is, the present invention provides the following inventions.

[1] An additive for a hot melt adhesive, including a C5 resin,
wherein a viscosity performance index VI of the C5 resin is 1.0 or more and 10,000 or less.
[2] The additive for a hot melt adhesive according to [1], wherein a number-average molecular weight Mn of the C5 resin is 100 or more and 2,000 or less.

[3] The additive for a hot melt adhesive according to [1] or [2], wherein the ratio (P/O) of the amount of substance of the paraffinic hydrogen of the C5 resin to the amount of substance of the olefinic hydrogen of the C5 resin is 5.0 or more and 100 or less.

[4] The additive for a hot melt adhesive according to any one of [1] to [3], wherein the C5 resin is a copolymer of a C5 fraction in which dienic-fraction concentration is 10% or more and 60% or less.

[5] The additive for a hot melt adhesive according to any one of [1] to [4], wherein the additive is a plasticizer.

[6] A hot melt adhesive composition including the additive according to any one of [1] to [5].

[7] The hot melt adhesive composition according to [6], further including a base polymer and a tackifier.

Advantageous Effects of Invention

The present invention can provide an additive for a hot melt adhesive, with which additive a hot melt adhesive composition excellent in low-temperature applicability and bleedout resistance can be obtained. Additionally, the present invention can provide a hot melt adhesive composition excellent in low-temperature applicability and bleedout resistance.

DESCRIPTION OF EMBODIMENTS

[Additive for Hot Melt Adhesive]

An additive for a hot melt adhesive according to the present invention includes a C5 resin having the below-mentioned characteristics. An additive for a hot melt adhesive according to the present invention can be suitably used as a plasticizer for a hot melt adhesive composition.

(C5 Resin)

In the present invention, a C5 resin is a copolymer of hydrocarbon monomers containing five carbon atoms in the molecule. A raw material that can be used for a C5 resin is commonly a fraction having a boiling point in the range of approximately from 20 to 110°C among the C5 fractions obtained by the thermal decomposition of petroleum. The C5 fractions can be classified into dienes, olefins, and paraffins. Examples of the dienic fraction include fractions having a plurality of multiple bonds in one molecule, for example, isoprene, *trans*-1,3-pentadiene, *cis-1,3*-pentadiene, and cyclopentadiene. Examples of the olefinic fraction include fractions having one multiple bond in one molecule, for example, *n*-1-pentene, 2-methyl-1-butene, *trans*-2-pentene, *cis*-2-pentene, 2-methyl-2-butene, and cyclopentene. Examples of the paraffinic fraction include fractions having no multiple bond in one molecule, for example, *n*-pentane, cyclopentane, and 2-methyl pentane.

The dienic fraction contains at least a diene such as isoprene, *trans*-1,3-pentadiene, or *cis*-1,3-pentadiene. It is known that when a C5 fraction containing a dienic fraction is copolymerized, the diene undergoes a cyclization reaction. That is, a copolymer in which the monomer is a diene has a cyclic structure in the backbone, and the properties of the copolymer can be adjusted in accordance with the ratio of the cyclic structure. The dienic-fraction concentration in the C5 fraction is preferably 10% or more and 60% or less, more preferably 15% or more and 55% or less, still more preferably 20% or more and 50% or less. Having the dienic-fraction concentration in the C5 fraction within the above-described range of value makes it easier to obtain the above-described viscosity performance index VI. Additionally, the reaction-component concentration (the total of the dienic-fraction concentration and the olefinic-fraction concentration) in the C5 fraction is preferably 20% or more and 90% or less, more preferably 25% or more and 85% or less, still more preferably 30% or more and 80% or less.

In the present invention, the concentration of the dienic fraction, the olefinic fraction, and the paraffinic fraction in the C5 raw material is the total value (GC%) calculated by a GC analysis from the peak areas of these components in a GC spectrum. The specific measurement conditions are as below-described in the Examples section.

A method of producing a C5 resin is not particularly limited, and can be performed by a conventional known method. A method of producing a C5 resin is, for example, as below-described.

To a C5 fraction, 0.01 to 5 wt% Friedel-Crafts catalyst is added, and the resulting mixture is allowed to undergo a polymerization reaction. After completion of the reaction, the Friedel-Crafts catalyst is removed by decomposition using an alkali, and lastly, unreacted oil and low-molecule polymers are removed by distillation or the like. Common examples of the Friedel-Crafts catalyst include aluminum trichloride, aluminum tribromide, boron trifluoride, and phenol complexes and butanol complexes thereof. Among these, aluminum trichloride, phenol complexes of boron trifluoride, and butanol complexes of boron trifluoride are preferable. The polymerization temperature is preferably 0 to 100°C, particularly preferably 0 to 80°C. Additionally, the polymerization time is preferably 0.1 to 10 hours when the amount of the catalyst is 0.1 to 2.0 parts by mass with respect to 100 parts by mass of the C5 fraction. The reaction pressure is preferably from atmospheric pressure to 1 MPa.

The double-bond moiety contained in the structure of the C5 resin can be hydrogenated. A method of hydrogenation is not particularly limited, and can be performed by a conventional known method. A method of hydrogenation is, for example, as below-described.

In the method of hydrogenation, a batch-type reactor, a flow-type continuous reactor, or the like can be used.

When a batch-type reactor is used, the reaction conditions are as follows: the temperature is usually 200 to 300°C, preferably 200 to 270°C; the reaction pressure is usually 0 to 10 MPaG (G denotes a gauge pressure; the same applies hereinafter), preferably 1 to 7 MPaG; and the reaction time is usually 0.5 to 8 hours, preferably 1 to 5 hours.

Specifically, a hydrogenated C5 resin can be obtained from a C5 resin, using a batch-type reactor and a nickel catalyst. That is, a C5 resin is added to an autoclave with a stirrer, a nickel-supporting-silica/alumina catalyst is fed, and the inside of the system is replaced with hydrogen. Then, a hydrogenation reaction can be caused by stirring under the above-described reaction conditions.

Additionally, when a flow-type continuous reactor is used, a fixed-bed flow reactor, preferably a liquid-gas co-current trickle-flow reactor, can usually be used. The reaction conditions are as follows: the temperature is usually 100 to 300°C, preferably 120 to 250°C; the reaction pressure is usually 0 to 10 MPaG, preferably 1 to 5 MPaG; and the LHSV (liquid hourly space velocity) is usually 2.0 to 12.0 [h$^{-1}$], preferably 5.0 to 12.0 [h$^{-1}$]. In this regard, the number of flow reactors is not limited, and hydrogenation split in two or more towers is also possible.

Specifically, a hydrogenated C5 resin can be obtained from a C5 resin by two-stage continuous hydrogenation using a palladium catalyst. That is, a C5 resin is dissolved in ethylcyclohexane to prepare a resin solution, and this resin solution is allowed to pass through a fixed bed flow reactor (of a gas-liquid co-current, descending-flow type) packed with a palladium-supporting-alumina catalyst to undergo a hydrogenation reaction under the above-described reaction conditions.

In this regard, as the ratio (P/O) of the amount of substance of the paraffinic hydrogen of the C5 resin hydrogenated to the amount of substance of the olefinic hydrogen of the C5 resin hydrogenated, the P/O of the C5 resin before hydrogenation can be used.

In the present invention, a C5 resin to be used has the following characteristics (a viscosity performance index VI, a number-average molecular weight Mn, and the ratio (P/O) of the amount of substance of the paraffinic hydrogen to the amount of substance of the olefinic hydrogen). Using the C5 resin as a plasticizer can decrease the viscosity of a hot melt adhesive composition in an application environment at a relatively low temperature (110 to 140°C), and besides, decrease the fluidity (i.e., increase the viscosity) in an environment of usage (at ordinary temperature to approximately 40°C).

The viscosity performance index VI ($V_{30}/V_{140}$) of the C5 resin is 1.0 or more and 10,000 or less, preferably 5.0 or more and 9,000 or less, more preferably 10 or more and 8,000 or less, still more preferably 15 or more and 7,000 or less, still more preferably 20 or more and 5,000 or less.

The number-average molecular weight Mn of the C5 resin is preferably 100 or more and 2,000 or less, more preferably 300 or more and 1,800 or less, still more preferably 400 or more and 1,000 or less. The boiling point of C5 of a C5 resin having a number-average molecular weight Mn of less than 100 is equal to or lower than the preparation temperature (160°C or more) of the hot melt adhesive composition. Accordingly, in the preparation of a hot melt composition, at least a part of a C5 resin will undesirably gasify, and thus, a C5 resin having a number-average molecular weight Mn of 100 or more is suitable as a plasticizer for a hot melt adhesive.

The ratio (P/O) of the amount of substance of the paraffinic hydrogen of the C5 resin to the amount of substance of the olefinic hydrogen of the C5 resin is preferably 5.0 or more and 100 or less, more preferably 7.0 or more and 80 or less, still more preferably 8.0 or more and 50 or less, still more preferably 10 or more and 30 or less.

In the present invention, the number-average molecular weight Mn of a C5 resin is a value measured by GPC (gel permeation chromatography). The ratio (P/O) of the amount of substance of the paraffinic hydrogen of the C5 resin to the amount of substance of the olefinic hydrogen of the C5 resin is a value measured with a nuclear magnetic resonance spectrum ($^1$H-NMR). The specific measurement methods are detailed in the Examples section below.

In the present invention, the viscosity performance index VI of a C5 resin is a value calculated in accordance with the following mathematical formulae (1) to (3) on the basis of the results of calculation of the viscosity index ($V_{30}$) at 30°C and the viscosity index ($V_{140}$) at 140°C.

$$V_{30} = 10\^(0.82 \times \log Mn \times P/O - 2.01 \times P/O + 0.97) \ldots (1)$$

$$V_{140} = 10\^(0.27 \times \log Mn \times P/O - 0.69 \times P/O + +0.43) \ldots (2)$$

$$\text{Viscosity performance index VI} = V_{30} / V_{140} \cdot\ldots (3)$$

[Hot Melt Adhesive Composition]

A hot melt adhesive has a quality such that it is solid at ordinary temperature, and liquid when heated and thereby melted. Accordingly, a hot melt adhesive is heat-melted, then applied to an adherend for bonding, and cooled to be solidified, acting as an adhesive. The advantages of a hot melt adhesive are, for example, that the adhesive contains no organic solvent, and hence, places a smaller burden on the environment, and additionally, that the adhesive does not require drying equipment. Furthermore, a hot melt adhesive affords a high adhesive rate, and thus, can enhance the productivity. In recent years, a hot melt adhesive has been an excellent adhesive applicable under stringent environmental regulations.

A hot melt adhesive composition according to the present invention includes the above-described additive for a hot melt adhesive as a plasticizer, and preferably further includes a base polymer and a tackifier. Additionally, the hot melt adhesive composition may further include an antioxidant and another component. A hot melt adhesive composition according to the present invention is excellent in low-temperature applicability and bleedout resistance.

The melt viscosity $\eta_{140}$ of the hot melt adhesive composition at 140°C is preferably 6,000 mPa·s or less, more preferably 4,000 mPa·s or less, still more preferably 2,000 mPa·s or less. The hot melt adhesive composition having a melt viscosity $\eta_{140}$ of 6,000 mPa·s or less at 140°C has excellent low-temperature applicability.

(Plasticizer)

As a plasticizer, the above-described additive for a hot melt adhesive is used. The details of the component are described above.

The amount of the plasticizer is not particularly limited, and is, for example, preferably 10 to 70 mass%, more preferably 20 to 60 mass%, still more preferably 25 to 55 mass%, still more preferably 30 to 50 mass%, with respect to the total amount of the hot melt adhesive composition.

(Base Polymer)

The base polymer is not particularly limited, and a conventionally known base polymer for a hot melt adhesive can be used. The base polymer to be used is, for example, a styrenic copolymer, preferably a styrenic block copolymer. The styrenic block copolymer is preferably a block copolymer that has a polymer block composed of a styrene-derived structural unit and a polymer block composed of a conjugated-diene-derived structural unit.

The polymer block composed of a styrene-derived structural unit may contain a styrenic-monomer-derived structural unit other than styrene. Examples of the styrenic monomer other than styrene include $\alpha$-methyl styrene, *o*-methylstyrene, *m*-methylstyrene, *p*-methylstyrene, *p-t*-butylstyrene, 2,4-dimethylstyrene, vinylnaphthalene, and vinylanthracene.

Examples of the conjugated diene in the polymer block composed of a conjugated-diene-derived structural unit include butadiene, isoprene, chloroprene, 2,3-dimethylbutadiene, 1,3-pentadiene, and 1,3-hexadiene. The conjugated-diene-derived structure is not particularly limited, and the conjugated-diene-derived structure may be hydrogenated to the extent that the properties of the structure are not impaired.

The above-described styrenic monomer, styrene monomer other than styrene, and conjugated diene may be used singly, or may be used in combination of two or more kinds thereof.

Specific examples of the styrenic block copolymer include polystyrene/polybutadiene/polystyrene triblock copolymers (SBS), polystyrene/polyisoprene/polystyrene triblock copolymers (SIS), and poly(a-methylstyrene)/polybutadiene/poly(a-methylstyrene) triblock copolymers. Additional examples include hydrogenated products of these, for example, hydrogenated products (SEBS) of polystyrene/polybutadiene/polystyrene triblock copolymers (SBS) and hydrogenated products (SEPS) of polystyrene/polyisoprene/polystyrene triblock copolymers (SIS). Among these, polystyrene/polybutadiene/polystyrene triblock copolymers (SBS) are preferable.

The amount of the base polymer is not particularly limited, and is, for example, preferably 10 to 40 mass%, more preferably 15 to 35 mass%, with respect to the total amount of the hot melt adhesive composition.

(Tackifier)

The tackifier is not particularly limited, and a conventionally known tackifier for a hot melt adhesive can be used. Examples of the tackifier include natural rosin, denatured rosin, hydrogenated rosin, glycerol esters of natural rosin, glycerol esters of denatured rosin, pentaerythritol esters of natural rosin, pentaerythritol esters of denatured rosin, pentaerythritol esters of hydrogenated rosin, copolymers of natural terpene, three-dimensional polymers of natural terpene, hydrogenated derivatives of copolymers of hydrogenated terpene, polyterpene resins, and hydrogenated derivatives of phenolic denatured terpene resin. These tackifiers may be used singly, or may be used in combination of two or more kinds thereof.

The amount of the tackifier is not particularly limited, and is, for example, preferably 10 to 70 mass%, more preferably 20 to 60 mass%, still more preferably 25 to 55 mass%, still more preferably 30 to 50 mass%, with respect to the total amount of the hot melt adhesive composition.

(Antioxidant)

The antioxidant is not particularly limited, and a conventionally known antioxidant for a hot melt adhesive can be used. Examples of the antioxidant include: hindered phenolic antioxidants such as 2,6-di-*t*-butyl-4-methylphenol, *n*-octadecyl-3-(4'-hydroxy-3',5'-di-t-butyl phenyl) propionate, 2,2'-methylenebis(4-methyl-6-*t*-butylphenol), 2,2'-methylenebis(4-ethyl-6-*t*-butylphenol), 2,4-bis(octylthiomethyl)-o-cresol, 2-t-butyl-6-(3-*t*-butyl-2-hydroxy-5-methyl benzyl)-4-methylphenyl acrylate, 2,4-di-t-amyl-6-[1-(3,5-di-*t*-amyl-2-hydroxyphenyl)ethyl]phenyl acrylate, 2-[1-(2-hydroxy-3,5-di-*tert*-pentylphenyl)] acrylate, and tetrakis[methylene-3-(3,5-di-*t*-butyl-4-hydroxyphenyl) propionate]methane; sulfuric antioxidants such as dilauryl thiodipropionate, laurylstearyl thiodipropionate, and pentaerythritoltetrakis(3-lauryl thiopropionate); phosphoric antioxidants such as tris(nonylphenyl) phosphite, and tris(2,4-di-*t*-butylphenyl) phosphite. These antioxidants may be used singly, or may be used in combination of two or more kinds thereof.

The amount of the antioxidant is not particularly limited, and is, for example, preferably 0.1 to 1 mass% with respect to the total amount of the hot melt adhesive composition.

(Other Components)

The hot melt adhesive composition may further include (an)other component(s) such as a filler, expander, heat stabilizer, light stabilizer, ultraviolet absorber, colorant, flame retardant, antistatic agent, and/or stringing inhibitor to the extent that the objects of the present invention are not impeded.

(Application Method)

A method of applying a hot melt adhesive composition is not particularly limited, and may be a contact application method or a contactless application method. Among these, a contactless application method is preferably used because the method requires a relatively small amount of application of a hot melt adhesive. Examples of the contactless application method include spiral application, omega application, and curtain spray application.

EXAMPLES

The present invention will be specifically described below with reference to Examples and Comparative Examples, but the present invention is not limited to these Examples.

[C5 Raw Material]

As the C5 raw materials used in Examples and Comparative Examples, the C5 raw materials 1 to 3 having the compositions shown in Table 1 below were provided. The compositional ratio (GC%) of a C5 fraction in the C5 raw material is the measurement result of the below-described GC analysis. In this regard, the reaction-component concentration is the total of the dienic-fraction concentration and the olefinic-fraction concentration.

[Measurement Conditions for GC Analysis]

Measurement device: a gas chromatograph GC-2025, manufactured by Shimadzu Science
Detector: a flame ionization detector (FID)
Column: DB-1 (manufactured by GL Sciences Inc.)
Measurement conditions: from 40°C to 250°C (at a temperature-raising rate of 15°C/min)

[Table 1]

| Type of C5 fraction | C5 raw material 1 | C5 raw material 2 | C5 raw material 3 |
|---|---|---|---|
| total concentration of diene fractions (GC%) | 26.8 | 46.1 | 15.7 |
| total concentration of olefinic fractions (GC%) | 19.9 | 30.4 | 14.1 |
| total concentration of paraffinic fractions (GC%) | 53.3 | 23.5 | 70.2 |
| total concentration of reaction components (GC%) | 46.7 | 76.5 | 29.8 |

[Example 1]

[Synthesis of C5 Resin]

Operation 1) Synthesis of untreated C5 resin

Into a stainless-steel-made pressure reactor having a nitrogen atmosphere, 450 g of the above-described C5 raw material 1 was introduced, and the pressure was raised to 0.8 kPaG. Next, the temperature in the reactor was stabilized at 20°C. Then, 2.7 g of a boron trifluoride diethyl ether complex was added dropwise, and the resulting mixture was allowed to react for 8 hours. After completion of the reaction, a solution mixture of 1.5 mL of 28% ammonia water and 6 g of methanol was added dropwise as a reaction terminator. After being stirred for 30 minutes, the reaction solution was collected, transferred to a separating funnel, and washed with ion-exchanged water. From the organic phase, the unreacted C5 raw materials were removed by concentration to obtain an untreated C5 resin.

Operation 2) Collection of component having a molecular weight of interest, by distillation under reduced pressure

The untreated C5 resin obtained was distilled under reduced pressure, i.e., 1.2 kPaA conditions, whereby a resin (having an Mn of 275) having a boiling point of 40 to 45°C at a distillation pressure was collected.

Operation 3) Adjustment of ratio (P/O) of amount of substance

Into a stainless-steel-made pressure reactor having a nitrogen atmosphere, 15 g of the resin collected by distillation, 5 g of *n*-octane, and 0.13 g of a boron trifluoride diethyl ether complex were introduced, and were allowed to react at 100°C for 5 hours. After completion of the reaction, a solution mixture of 0.15 mL of 28% ammonia water and 0.6 g of methanol was added dropwise as a reaction terminator. After being stirred for 30 minutes, the reaction solution was collected, transferred to a separating funnel, and washed with ion-exchanged water. From the organic phase, the n-octane was removed by concentration to obtain a C5 resin 1.

[Preparation of Hot Melt Adhesive Composition]

The C5 resin 1 synthesized as an additive for a hot melt adhesive as described above, a base polymer (SBS, at a styrene/butadiene ratio of 35/65), a tackifier (a hydrogenated petroleum resin, having a softening point of 100°C), and an antioxidant (tetrakis[3-(3',5'-di-*t*-butyl-4'-hydroxyphenyl)propionic acid]pentaerythritol) were mixed at a ratio of 190 parts by mass/100 parts by mass/186 parts by mass/0.5 parts by mass respectively, and stirred at 180°C so as to be uniform, whereby a hot melt adhesive composition 1 was obtained.

[Example 2]

An untreated C5 resin was synthesized by the same method as Operation 1) described in Example 1, and distilled under reduced pressure, i.e., 0.6 kPaA conditions, by the same method as Operation 2), whereby a C5 resin 2 (having an Mn of 322) having a boiling point of 80 to 125°C at a distillation pressure was obtained.
Subsequently, a hot melt adhesive composition 2 was obtained in the same manner as in Example 1 except that the C5 resin 2 synthesized as described above was used as an additive for a hot melt adhesive.

[Example 3]

An untreated C5 resin was synthesized by the same method as Operation 1) described in Example 1, and distilled under reduced pressure, i.e., 0.5 kPaA conditions, by the same method as Operation 2), whereby a C5 resin 3 (having an Mn of 507) was obtained, wherein the resin was a residue obtained by removing resins having a boiling point of 120°C or less at a distillation pressure.

Subsequently, a hot melt adhesive composition 3 was obtained in the same manner as in Example 1 except that the C5 resin 3 synthesized as described above was used as an additive for a hot melt adhesive.

[Example 4]

Using the C5 resin 3, the ratio (P/O) of the amount of substance was adjusted by the same method as Operation 3) described in Example 1, whereby a C5 resin 4 having an Mn of 541 was obtained.

Subsequently, a hot melt adhesive composition 4 was obtained in the same manner as in Example 1 except that the C5 resin 4 synthesized as described above was used as an additive for a hot melt adhesive.

[Example 5]

An untreated C5 resin was synthesized by the same method as Operation 1) described in Example 1, and distilled under reduced pressure, i.e., 0.2 kPaA conditions, by the same method as Operation 2), whereby a C5 resin 5 (having an Mn of 805) was obtained, wherein the resin was a residue obtained by removing resins having a boiling point of 200°C or less at a distillation pressure.

Subsequently, a hot melt adhesive composition 5 was obtained in the same manner as in Example 1 except that the C5 resin 5 synthesized as described above was used as an additive for a hot melt adhesive.

[Example 6]

Using the C5 resin 5, the ratio (P/O) of the amount of substance was adjusted by the same method as Operation 3) described in Example 1, whereby a C5 resin 6 having an Mn of 781 was obtained.

Subsequently, a hot melt adhesive composition 6 was obtained in the same manner as in Example 1 except that the C5 resin 6 synthesized as described above was used as an additive for a hot melt adhesive.

[Example 7]

An untreated C5 resin was synthesized by the same method as Operation 1) described in Example 1, and distilled under reduced pressure, i.e., 0.2 kPaA conditions, by the same method as Operation 2), whereby a C5 resin 7 (having an Mn of 994) was obtained, wherein the resin was a residue obtained by removing resins having a boiling point of 240°C or less at a distillation pressure.

Subsequently, a hot melt adhesive composition 7 was obtained in the same manner as in Example 1 except that the C5 resin 7 synthesized as described above was used as an additive for a hot melt adhesive.

[Example 8]

A C5 resin 8 having an Mn of 326 was obtained by the same methods as Operation 1) and Operation 2) described in Example 2 except that the C5 raw material 1 was changed to the C5 raw material 2.

Subsequently, a hot melt adhesive composition 8 was obtained in the same manner as in Example 1 except that the C5 resin 8 synthesized as described above was used as an additive for a hot melt adhesive.

[Example 9]

A C5 resin 9 having an Mn of 484 was obtained by the same methods as Operation 1) and Operation 2) described in Example 3 except that the C5 raw material 1 was changed to the C5 raw material 3.

Subsequently, a hot melt adhesive composition 9 was obtained in the same manner as in Example 1 except that the C5 resin 9 synthesized as described above was used as an additive for a hot melt adhesive.

[Example 10]

An untreated C5 resin was synthesized by the same method as Operation 1) described in Example 1, and subsequently distilled under reduced pressure, i.e., 0.5 kPaA conditions, by the same method as Operation 2), whereby a C5 resin 10 (having an Mn of 533) was obtained, wherein the resin was a residue obtained by removing resins having a boiling point of 120°C or less at a distillation pressure. Then, an unhydrogenated C5 resin having an Mn of 533 was obtained by the same method as Operation 3). Then, 200 g of the unhydrogenated C5 resin and 1.1 g of a nickel catalyst were introduced into a stainless-steel-made reactor, and the olefinic portion underwent a hydrogenation reaction in a hydrogen atmosphere under conditions at 200°C and 0.8 MPaG for 18 hours. After completion of the reaction, the nickel catalyst was removed by filtration to obtain a C5 resin 10.

Subsequently, a hot melt adhesive composition 10 was obtained in the same manner as in Example 1 except that the C5 resin 10 synthesized as described above was used as an additive for a hot melt adhesive.

[Comparative Example 1]

A hot melt adhesive composition 11 was obtained in the same manner as in Example 1 except that process oil (having an Mn of 475; tradename, S-1; manufactured by Idemitsu Kosan Co., Ltd.) was used as an additive for a hot melt adhesive.

[Evaluation of Additive for Hot Melt Adhesive]

With the above-described C5 resins 1 to 10 (additives for a hot melt adhesive) obtained, the number-average molecular weight (Mn) and the P/O were measured by the following methods, and the viscosity performance index VI was calculated. Additionally, the viscosity of each of the C5 resins 1 to 10 (additives for a hot melt adhesive) was evaluated. The results of these are shown in Table 2.

[Method of Measuring Number-average Molecular Weight (Mn) of C5 Resin]

The number-average molecular weight (Mn) of the C5 resin was measured by GPC (gel permeation chromatography) under the following measurement conditions.

(Measurement Conditions)

Measurement device: HLC-8220GPC, manufactured by Tosoh Corporation
Detector: a differential refractive index (RI) detector
Column: Shodex GPC KF804 × 3 columns (manufactured by Showa Denko K.K.)
Eluent: tetrahydrofuran
Flow rate: 1.0 mL/minute
Temperature: 40°C
Calibration curve: prepared using a polystyrene standard sample (manufactured by Tosoh Corporation)

[Method of Measuring Ratio (P/O) of Amount of Substance of Paraffinic Hydrogen of C5 Resin to Amount of Substance of Olefinic Hydrogen of C5 Resin]

The P/O of the C5 resin was calculated with a nuclear magnetic resonance spectrum ($^1$H-NMR) under the following measurement conditions.

(Measurement Conditions)

Measurement device: a nuclear magnetic resonance apparatus NMR-400, manufactured by JEOL Ltd.
Solvent: $CDCl_3$

[Calculation of Viscosity Performance Index VI of C5 Resin]

The viscosity index ($V_{30}$) of the C5 resin at 30°C and the viscosity index ($V_{140}$) of the C5 resin at 140°C were calculated in accordance with the following mathematical formulae (1) and (2) respectively. Next, the viscosity performance index VI of the C5 resin was calculated in accordance with the following mathematical formula (3).

$$V_{30} = 10^\wedge(0.82 \times \log Mn \times P/O - 2.01 \times P/O + 0.97) \ldots (1)$$

$$V_{140} = 10^\wedge(0.27 \times \log Mn \times P/O - 0.69 \times P/O + 0.43) \ldots (2)$$

$$\text{Viscosity performance index } VI = V_{30} / V_{140} \ldots (3)$$

[Evaluation of Hot Melt Adhesive Composition]

The hot melt adhesive compositions 1 to 11 obtained as described above were tested as below-described.

[Low-temperature Applicability Test]

The melt viscosity of the hot melt adhesive composition at 140°C was measured under the same measurement conditions as described above, and evaluated on the following rating criterion. The evaluation results are shown in Table 3.

(Rating Criterion)

O: the melt viscosity of the hot melt adhesive was 6,000 mPa·s or less.
×: the melt viscosity of the hot melt adhesive was more than 6,000 mPa·s.

[Bleedout Resistance Test]

The hot melt adhesive composition obtained as described above was dissolved in an amount of 40 g in 40 g of toluene to prepare a hot melt adhesive composition/toluene solution. The hot melt adhesive composition/toluene solution obtained was cast on a PET film using an applicator. Subsequently, the film was dried at 100°C for 1 hour using a dryer to remove toluene, whereby a hot melt adhesive film having a thickness of 50 μm was obtained. Subsequently, the hot melt adhesive film was cut to a 3 cm × 5 cm rectangle, and bonded to a piece of paper in such a manner that the hot melt adhesive face adhered to the paper. Then, the resulting laminate was heat-treated at 40°C for 1 day. Then, oozing (a bleedout phenomenon) of the hot melt adhesive on the paper was recognized and evaluated on the following rating criterion. The evaluation results are shown in Table 3.

(Rating Criterion)

O: no bleedout phenomenon was recognized.
×: a bleedout phenomenon was recognized.

[0084]

[Table 2]

| | Example 1 | Example 2 | Example 3 | Example 4 | Example 5 | Example 6 | Example 7 | Example 8 | Example 9 | Example 10 | Comparative Example 1 |
|---|---|---|---|---|---|---|---|---|---|---|---|
| C5 resin | 1 | 2 | 3 | 4 | 5 | 6 | 7 | 8 | 9 | 10 | - |
| hydrogenation | × | × | × | × | × | × | × | × | × | ○ | - |
| Mn | 275 | 322 | 507 | 541 | 805 | 781 | 994 | 326 | 484 | 533 | 475 |
| P/O | 21.6 | 11.5 | 10.6 | 15.8 | 8.1 | 12.0 | 9.7 | 15.0 | 11.9 | 18.5 | - |
| log(Mn) | 2.44 | 2.51 | 2.71 | 2.73 | 2.91 | 2.89 | 3.00 | 2.51 | 2.68 | 2.73 | 2.68 |
| viscosity index at 30°C (V30) | 6 | 32 | 1,498 | 43,042 | 9,785 | 211,780 | 216,513 | 54 | 1,755 | 141,076 | - |
| viscosity index at 140°C ($V_{140}$) | 0.6 | 1.9 | 7.2 | 15.5 | 15.7 | 25.7 | 39.2 | 1.8 | 7.0 | 19.3 | - |
| viscosity performance index VI ($V_{30}/V_{140}$) | 10 | 17 | 208 | 2,779 | 623 | 6,319 | 5,529 | 30 | 251 | 7,319 | - |

[0084]

[Table 3]

| | Example 1 | Example 2 | Example 3 | Example 4 | Example 5 | Example 6 | Example 7 | Example 8 | Example 9 | Example 10 | Comparative Example 1 |
|---|---|---|---|---|---|---|---|---|---|---|---|
| hot melt adhesive composition | 1 | 2 | 3 | 4 | 5 | 6 | 7 | 8 | 9 | 10 | 11 |
| melt viscosity (mPa·s) at 140°C | 940 | 580 | 1,490 | 1,000 | 650 | 2,860 | 3,270 | 650 | 1,750 | 770 | 2,360 |
| low-temperature applicability | ○ | ○ | ○ | ○ | ○ | ○ | ○ | ○ | ○ | ○ | ○ |
| bleedout resistance | ○ | ○ | ○ | ○ | ○ | ○ | ○ | ○ | ○ | ○ | × |

**Claims**

1.  An additive for a hot melt adhesive, comprising a C5 resin,
    wherein a viscosity performance index VI of the C5 resin is 1.0 or more and 10,000 or less.

2.  The additive for a hot melt adhesive according to claim 1, wherein a number-average molecular weight Mn of the C5 resin is 100 or more and 2,000 or less.

3.  The additive for a hot melt adhesive according to claim 1, wherein the ratio (P/O) of the amount of substance of the paraffinic hydrogen of the C5 resin to the amount of substance of the olefinic hydrogen of the C5 resin is 5.0 or more and 100 or less.

4.  The additive for a hot melt adhesive according to claim 1, wherein the C5 resin is a copolymer of a C5 fraction in which dienic-fraction concentration is 10% or more and 60% or less.

5.  The additive for a hot melt adhesive according to claim 1, wherein the additive is a plasticizer.

6.  A hot melt adhesive composition comprising the additive according to any one of claims 1 to 5.

7.  The hot melt adhesive composition according to claim 6, further comprising a base polymer and a tackifier.

## INTERNATIONAL SEARCH REPORT

| International application No. |
|---|
| **PCT/JP2023/024709** |

**A. CLASSIFICATION OF SUBJECT MATTER**

***C09J 201/00***(2006.01)i; ***C09J 11/08***(2006.01)i
FI:  C09J201/00; C09J11/08

According to International Patent Classification (IPC) or to both national classification and IPC

**B. FIELDS SEARCHED**

Minimum documentation searched (classification system followed by classification symbols)

C08K3/00-13/08; C08L1/00-101/14; C09J1/00-5/10; C09J7/00-7/50; C09J9/00-201/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/066791 A1 (ZEON CORPORATION) 02 April 2020 (2020-04-02)<br>claims 1-2, paragraphs [0013]-[0024], [0028]-[0048], [0064]-[0065], examples 1-6 | 1-7 |
| A | JP 11-172214 A (ZEON CORPORATION) 29 June 1999 (1999-06-29)<br>claim 1, paragraphs [0001], [0007]-[0016], polymerization examples 1-6 | 1-7 |
| A | JP 2020-33543 A (ZEON CORPORATION) 05 March 2020 (2020-03-05)<br>claims 1, 6-7, paragraphs [0089]-[0116], [0129]-[0132], production example 4 | 1-7 |
| A | JP 2010-132761 A (TOSOH CORP) 17 June 2010 (2010-06-17)<br>claims 1, 3, 5, paragraphs [0014]-[0016], examples (resin 1-5, 7) | 1-7 |
| A | JP 2-160886 A (MARUZEN PETROCHEM CO LTD) 20 June 1990 (1990-06-20)<br>claim (1), p. 3, lower right column, lines 4-19, reference example 2 | 1-7 |
| P, A | JP 2022-115582 A (ZEON CORPORATION) 09 August 2022 (2022-08-09)<br>claims 1-3, paragraphs [0015]-[0029], [0042]-[0050], examples 1-3 | 1-7 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 September 2023** | **19 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/024709**

| Patent document cited in search report | | | Publication date (day/month/year) | Patent family member(s) | Publication date (day/month/year) |
|---|---|---|---|---|---|
| WO | 2020/066791 | A1 | 02 April 2020 | CN 112703236 A claims 1-2, paragraphs [0028]-[0043], [0048]-[0067], [0084]-[0085], examples 1-6 | |
| JP | 11-172214 | A | 29 June 1999 | (Family: none) | |
| JP | 2020-33543 | A | 05 March 2020 | (Family: none) | |
| JP | 2010-132761 | A | 17 June 2010 | (Family: none) | |
| JP | 2-160886 | A | 20 June 1990 | (Family: none) | |
| JP | 2022-115582 | A | 09 August 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008239931 A